# EUROPEAN PATENT APPLICATION

(11) **EP 2 182 701 A1**
(43) Date of publication of application: **05.05.2010**
(21) Application number: 08305765.3
(22) Date of filing: 31.10.2008
(51) Int. Cl.: H04L 29/12

(54) **Methods and apparatuses for allocating home addresses to a mobile node**

(71) Applicant: FRANCE TELECOM, 75015 Paris (FR)
(72) Inventor: Antoine, Stéphane, LONDRES, W4 2PZ (GB); Duda, Adrian, LONDON, E17 7BT (GB)
(74) Representative: Cabinet Plasseraud

(57) **Abstract**

A method of allocating a plurality of home addresses (HoA) to a mobile node (MN) comprising receiving a registration request from the MN at a second network entity associated with a second mobility service provider, the MN having a first HoA allocated by a first network entity associated with a first mobility service provider, receiving an indication from the MN at the second network entity, and processing the indication to enable the second network entity to allocate to the MN a second HoA different to the first HoA, and allocating the second HoA the MN. The indication may be in the form of: a data packet containing the first HoA allocated to the MN, two consecutive registration request of a particular format being received at the second network node from the same MN, or a response from the MN to a probe message transmitted by the second network entity to the MN.

## Description

### Field of the Invention

The present invention relates in general to a method of allocating a home address to a mobile node. Particularly but not exclusively, the invention relates to a method of allocating a plurality of home addresses to a mobile node having simultaneous access to a number of different networks or sub-networks.

### Background of the Invention

When a mobile node is away from its home network and detects that it has moved to a foreign network, it obtains a care-of address on the foreign network which it registers with its home agent. Depending on the method of attachment, the mobile node will register either directly with its home agent, or through a foreign agent which forwards the registration to the home agent.

Datagrams sent to the mobile node's home address can then be intercepted by its home agent, tunnelled by the home agent to the mobile node's care-of address, received at the tunnel endpoint (either at a foreign agent or at the mobile node itself), and finally delivered to the mobile node.

In the reverse direction, datagrams sent by the mobile node are generally delivered to their destination using standard IP routing mechanisms, not necessarily passing through the home agent. When away from home, Mobile IP uses protocol tunnelling to hide a mobile node's home address from intervening routers between its home network and its current location. The tunnel terminates at the mobile node's care-of address. The care-of address is an address to which datagrams can be delivered via conventional IP routing. At the care-of address, the original datagram is removed from the tunnel and delivered to the mobile node.

A mobile node operating under Mobile Internet Protocol Version 4 (MIPv4) can simultaneously use two or more Mobility Service Providers by multiple MIP (mobile internet protocol) connections. In practice, having multiple MIP connections may be achieved by having a Mobile node with multiple Mobile IP clients or with several mobile IP instances. Alternatively multiple Mobile IP connections may be enabled by having an evolved Mobile IP client capable of managing several Mobile IP sessions. Each mobile IP session consists of a registration between the mobile node and the Home agent (HA) of the corresponding mobility service provider. A mobile having several MIP sessions will have thus registered on several home agents.

Home Agents of different Mobility Service Providers (MSP) are independent of each other. A Home Agent is located on the home network of the corresponding MSP. Each home network is configured with a pool of home (IP) addresses. Such a pool can be configured with private IPv4 addresses. A home address selected from the pool of home addresses is allocated to the Mobile Node wishing to anchor to the corresponding Home Agent (HA). Each mobile node will be allocated a single Home address (HoA) for each Mobility service provider. In order to benefit from multiple Mobility service providers a MN can anchor to several Home Agents simultaneously. By registering with multiple Home Agents, the mobile acquires several Home addresses. Each Home address has been allocated from the pool of addresses on the home network of the respective MSP. Since the different Home Agents providing a MIPv4 service to the same mobile node are independent of one another, the pool of addresses on the home networks, from which the home addresses are drawn are also independent. Independent pools of IP addresses may contain several ranges of overlapping IP addresses. As the pools of home addresses have been configured independently in each MSP home network, it is possible to find two home networks with pools of IP addresses containing exactly the same IP addresses. As a consequence there exists the possibility that a mobile node registered with two different home agents simultaneously may be allocated two identical home addresses. This can lead to routing problems since the mobile node will have difficulty separating different data streams having the same address.

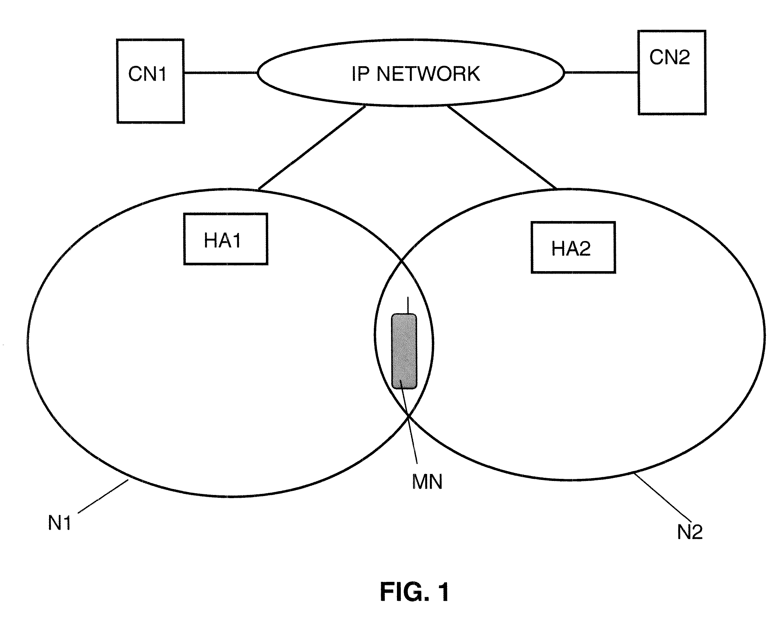

An example of such a potential problem is illustrated in Figure 1 which depicts a mobile node (MN) having access to two independent mobility service providers - Mobility Service Provider 1 (MSP1) and Mobility Service Provider 2 (MSP2). Home Agent 1 (HA1) on a network N1 is a network entity of a first Mobility Service Provider (MSP1) and provides routing and mobility for users subscribed to MSP1. Similarly, Home Agent 2 (HA2) is a network entity of a second Mobility Service Provider (MSP2) and provides routing and mobility for users subscribed to MSP2. CN1 and CN2 refer to correspondent nodes with which the mobile node may communicate.

In this example, it is assumed that the mobile node MN is a subscriber of the first mobility service provider MSP1 and hence the mobile node MN is registered through normal MIP with the first home agent HA1. The registration with the first home agent HA1 is done from a Care of address 1 (CoA1) of the mobile node MN.

Since the mobile node MN is registered with the first home agent HA1, it uses the Home Address (HoA1) allocated to it by the first home agent HA1 to communicate with the outside world. The Home address 1, HoA1, is obtained during MIP registration with the first home agent HA1.

Since the mobile MN is moving around, it may roam into a covered access network from which it is able to discover another mobility service. For example, MN may discover the presence of a second mobility service provider MSP2 on network N2, from its current network N1. The mobile node MN then wishes according to its local policy, to use mobility service provider MSP2 for a subset of its services. Various reasons may drive the mobile node MN to attempt to use second mobility service provider MSP2. It could be, for example, that the mobile node MN, as a subscriber of the second mobility service provider MSP2, will benefit from lower charging fees for certain applications (e.g. VoIP...). Alternatively, it could be that the mobile node MN will experience less congestion on the path that leads to the Internet through the second mobility service provider MSP2. The mobile MN then decides to register with the second home agent HA2 of the second mobility service provider MSP2, to communicate via the second mobility service provider MSP2.The mobile node MN sends a Registration Request to HA2 to obtain a new Home Address from MSP2.

The registration request is sent from Care of Address CoA2. CoA2 may be obtained from another network different from the network from which CoA1 was obtained or CoA2 may be equal to CoA1 when the mobile node MN uses the same interface to contact both mobility service providers via the first home agent HA1, and the second home agent HA2. On completion of registration with the second home agent HA2, the second home agent HA2 allocates a second home address HoA2 as a Home Address to the mobile node MN.

The mobile MN is thereby registered simultaneously with the first home agent HA1 and the second home agent HA2. The mobile node MN can thus benefit from the services of both the first mobility service provider MSP1 and the second mobility service provider MSP2 simultaneously. According to its local policy and several conditions, the mobile node MN will be able to preferably route its packets stream through the first home agent HA1 or through the second home agent HA2. All packets sent through the first mobility service provider MSP1 are tunnelled to and from the first home agent HA1. All packets sent through the second mobility service provider MSP2 are tunnelled to and from the second home agent HA2.

According to the MIP reverse tunnelling mechanism, packets tunnelled from the mobile node MN through the first home agent HA1 have a first home address HoA1 as source address. Similarly, packets tunnelled to the second home agent HA2 have a second home address HoA2 as source address.

A problem that may arise during such address allocation is that the second home agent HA2 allocates the mobile node MN with a home address HoA which is identical to the home address HoA allocated by the first home agentHA1. As a consequence two identical home addresses HoAs will reside on the same mobile node MN. The most immediate problem that results from such an address allocation is a routing problem that stems from the difficulty of the mobile node MN to separate different streams having the same source address as explained below.

When the second home agent HA2 and the first home agent HA1 allocate the mobile node MN with two identical Home addresses, it is more difficult for the mobile node to split packet streams to take different paths to the first home agent HA1 and the second home agent HA2.

For example, assuming that the mobile node MN has started a voice call through the first home agent HA1 with the first mobility service provider MSP1. When the mobile node MN obtains additional services from the second mobility service provider MSP2 via the second home agent HA2, the MN may choose to use the second home agent HA2 for all Web browsing communications. When the application starts a web browsing session, the IP layer of the mobile node MN should give the application an IP address as source address. As the MN mobile nose is running two instances of MIP, in parallel, the source address will be either the first home address HoA1 or the second home address HoA2. The policy engine forces the web application to have the second home address HoA2 as a source address. Accordingly, the policy engine uses Source Address HoA2 as a filter element to force the web browsing packets towards the home agent HA2.

If the second home address HoA2 is equal to the first home address HoA1, then the differentiation may be done on the destination port number only. The destination port number of a web browsing is different from the destination port number of a voice application. A difficulty arises, however, when the mobile node MN runs applications that do not have well known destination ports. If the mobile node MN starts several applications with unknown ports, the destination port is not enough to separate different traffic streams. In this case the source address of each packet stream must be used to separate the streams. Consequently, if the packets of the stream have identical source addresses (HoA1=HoA2), it will be more difficult or even impossible for the engine to select which packets goes to which home agent HA.

Patent application CN1620794 proposes a method for a home agent to support multiple Mobile IP sessions for a mobile node. The Mobile node is considered to have the same Network Access Identifier (NAI), and uses the same home address.

CN101010969 proposes a method for facilitating concurrent effectuation of more packet data communications at a mobile node. Both a normal packet data communication session and, for instance, an IOTA provisioning session are concurrently performed. Since both communication sessions can concurrently be performed, one or the other of the communication sessions need not be terminated to permit the other of the communication sessions to be performed.

None of these documents however addresses the aforementioned problem which may arise when a mobile node is allocated the same home address from two different home agents of mobility service providers or networks.

### Summary of the Invention

Accordingly, it would be advantageous to provide a method of allocating home addresses to a mobile node having simultaneous access to a plurality of mobility service providers, in which conflicts resulting from the mobile node being allocated the same home address by two or more home agents of mobility service providers or networks are alleviated and in which the mobile node can effectively direct its traffic streams.

To better address one or more of the foregoing concerns, according to a first aspect of the invention there is provided, a method of allocating a plurality of IP addresses to a mobile node, the method comprising: receiving a registration request from the mobile node at a second network entity, the mobile node having a first home address allocated by a first network entity with which it is registered; receiving an indication for address allocation from the mobile node at the second network entity; processing the indication to enable the second network entity to allocate to the mobile node a further home address different to the first home address; and allocating the further home address to the mobile node.

According to a second aspect of the invention there is provided, a method of registering a mobile node at a first network entity and at a second network entity, the method comprising transmitting a registration request from the mobile node to a second network entity, the mobile node having a first home address allocated by a first network entity with which it is registered; transmitting an indication for address allocation to the second network entity to enable the second network entity to allocate to the mobile node a further home address different to the first home address.

According to a third aspect of the invention there is provided, a network entity comprising: a transceiver for receiving a registration request from a mobile node, the mobile node having a first home address allocated by a first network entity with which it is registered; the transceiver further being for receiving an indication for address allocation from the mobile node; and a processor for processing the indication to enable the network entity to allocate to the mobile node a further home address different to the first home address, and for allocating the further address to the mobile node.

According to a fourth aspect of the invention, there is provided a mobile node capable of being registered to a first network entity and to a second network entity, the mobile node having a first home address allocated by the first network entity and comprising a transceiver for transmitting a registration request to the second network entity and a processor for providing an indication for enabling the second network entity to allocate to the mobile node a second home address different to the first home address, the transceiver being operable to transmit the indication to the second network entity.

The first network entity and the second network entity may correspond respectively to first and second networks, or sub networks. The first and second networks may be independent networks and may each correspond to a respective mobility service provider. A mobile node may thus be able to simultaneously access a plurality of networks or mobility service providers.

The indication for address allocation may be provided in the form of a registration request containing the first home address allocated to the mobile node. Alternatively the indication may be in the form of two consecutive registration requests of a particular format being received at the second network node from the same mobile node. Alternatively, the indication may be in the form of a response from the mobile node to a probe message transmitted by the second network entity to the mobile node.

Accordingly, in an embodiment of the invention, the indication is provided by or comprises the registration request including the first home address; and wherein the registration request is processed such that the second network entity allocates to the mobile node, a second home address as the further home address such that the second home address is different to the first home address included in the registration request.

In an alternative embodiment the second network entity allocates a second home address to the mobile node and transmits a registration reply containing the second home address to the mobile mode; and wherein the indication is provided by receiving, if the second home address is identical to the first home address, a second registration request indicating rejection of the second home address; and receiving a third registration request from the mobile node requesting a new home address; and wherein on reception of the second and third registration requests from the mobile node, the network entity allocates to the mobile node, a third home address, different to the second home address as the further home address.

In a further embodiment, the second network entity selects a second home address for the mobile node; and transmits a probe message to a destination corresponding to the second home address, wherein the indication is provided by the response to the probe message, the method further comprising either allocating to the mobile node, a third home address, different to the second home address, as the further address if the response indicates that the second home address is already in use by the mobile node; or allocating to the mobile node, the second home address, as the further address, if the response indicates that the second home address is not already in use by the mobile node.

In an embodiment of the method of registering the mobile node at the first network entity and at the second network entity, the method includes inserting the first home address into the registration request to provide the indication; and transmitting the registration request including the first home address to the second network entity

In an alternative embodiment of the method of registering the mobile node at the first network entity and at the second network entity, the method further includes receiving a registration reply containing a second home address; and if the second home address is identical to the first home address the indication is provided by transmitting a second registration request to the second network entity indicating rejection of the second home address and transmitting a third registration request to the second network entity requesting a new home address as the further address.

In a further embodiment the method of registering the mobile node at the first network entity and at the second network entity includes receiving a probe message transmitted from the second network entity to a second home address and wherein the indication is provided by transmitting a reply to the probe message, to the second network entity indicating if the second home address is identical to the first home address.

In an embodiment of the network entity, the indication is provided by the registration request including the first home address allocated to the mobile node by the first network entity; and wherein the processor is operable to process the registration request to allocate the further home address, such that the further home address is different to the first home address included in the registration request.

In an alternative embodiment of the network entity, the processor is operable to allocate a second home address to the mobile node; and the transceiver is operable to transmit a registration reply containing the second home address to the mobile mode and to receive as the indication, if the second home address is identical to the first home address, a second registration request indicating rejection of the second home address and a third registration request from the mobile node requesting a new home address; and wherein the processor is operable, on reception of the second and third registration requests from the mobile node, to allocate to the mobile node a third home address different to the second home address, as the further address.

In a further embodiment of the network entity, the processor is operable to select a second home address from a plurality of available IP addresses for the mobile node, to generate a probe message for transmission to the second home address; wherein the indication is provided by the reply to the probe message, to process the reply to the probe message to determine if the second home address is in use by the mobile node and to either allocate to the mobile node a third home address, different to the second home address, as the further address, if it is determined that the second home address is already in use by the mobile node; or allocate the second home address as the further address to the mobile node if it is determined that the second home address is not already in use by the mobile node.

In an embodiment of the mobile node, the processor is operable to insert the first home address into the registration request to provide the indication; and the transceiver is operable to transmit the registration request including the first home address to the second network entity.

In an alternative embodiment of the mobile node, the transceiver is operable to receive a registration reply containing a second home address; and the processor is operable to process the registration reply to provide the indication, such that the indication comprises transmission of a second registration request to the second network entity indicating rejection of the second home address and transmission of a third registration request to the second network entity requesting a new home address.

In a further embodiment of the mobile node, the transceiver is operable to receive a probe message and the processor is operable to generate a reply to the probe message as the indication to indicate if the second home address is identical to the first home address.

In embodiments of the invention the registration request can include a home address field and an alternate home address field, the first home address being inserted into the alternate home address field.

In embodiments of the invention, the second registration request may include a lifetime indicator set to 0 and wherein on reception of the second registration request the second network entity deletes an association between the second home address and the care of address of the mobile node. The third registration request may include a home address field set to 0.

In some embodiments a first-in-first-out system may be employed by the second network entity to allocate the home addresses to the mobile node.

In embodiments of the invention, the probe message may be a ping message having a destination home address corresponding to the second home address and wherein if the second home address is used by the mobile node an echo reply to the ping message is received, while if the second home address is not used by the mobile node a host unreachable message is received at the second network entity.

In embodiments of the invention the second network entity may create an association between the second home address and the care of address of the mobile node, from which the mobile node is attempting to register, and wherein if the second home address is in use by the mobile node, the network entity deletes the association between the second home address and the care of address and sends a negative registration reply to the mobile node.

In any of the foregoing embodiments of the invention the first and/or the second network entity may store an association between an identifier of a mobile node and the home address that that network entity has allocated to the mobile node such that on receiving a registration request from a mobile mode the said network entity verifies if there is an association between the said mobile node and a home address, and if there is an association, allocating the associated home address to the mobile node.

In embodiments of the invention the mobile node may communicate with the second network entity via a mobility proxy agent. Accordingly, the methods and devices according to the invention may be implemented in proxy mobile IPv4 applications. The methods and devices may also be implemented in mobile IPv6 applications.

The methods according to the invention may be computer implemented. The methods may be implemented in software on a programmable apparatus. They may also be implemented solely in hardware or in software, or in a combination thereof.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

A further aspect of the invention may thus provide a computer readable medium having computer-executable instructions to enable a computer system to perform any of the methods described above.

### Brief Description of the Drawings

Embodiments of the invention will now be described, by way of example only, and with reference to the following drawings in which:-
Figure 1 is a schematic diagram of a mobile node having simultaneous access to two independent networks;
Figure 2 is a communication diagram of a method of allocating a plurality of home addresses to a mobile node according to a first embodiment of the invention;
Figure 3 is a communication diagram of a method of allocating a plurality of home addresses to a mobile node according to a second embodiment of the invention;
Figures 4A and 4B are schematic diagrams of a FIFO memory according to at least the second embodiment of the invention;
Figure 5 is a communication diagram of a method of allocating a plurality of home addresses to a mobile node according to a third embodiment of the invention;
Figure 6 is a communication diagram of a method of allocating a plurality of home addresses to a mobile node according to the third embodiment of the invention in the case where a second network entity allocates an address to a mobile node identical to an address allocated to the mobile node by another network;
Figure 7 is a communication diagram of a method of allocating a plurality of home addresses to a mobile node according to the third embodiment of the invention in the case where a second network entity allocates an address to a mobile node which is different to an address allocated to the mobile node by another network; and
Figure 8 is a communication diagram of a method of allocating a plurality of home addresses to a mobile node according to any of the embodiments of the invention.

### Detailed description

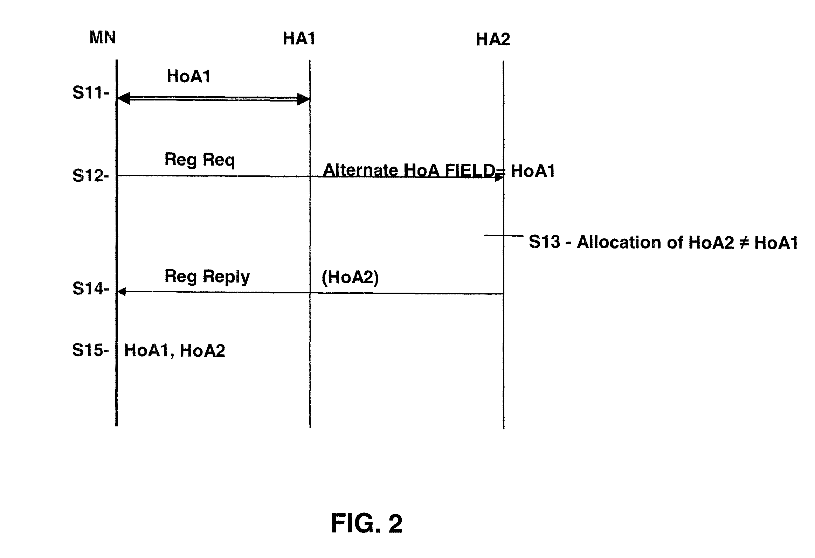

A first embodiment of a method of allocating a plurality of home addresses to a mobile node, according to a first embodiment of the invention will be described with reference to Figures 1 and 2.

In step S11 of the method of the first embodiment of the invention mobile node MN is registered with a first home agent HA1 of a first mobility service provider on a first network N1 and is allocated a first Home Address HoA1 by the first home agent HA1 enabling it to communicate with the outside world. The mobile node MN thus uses tunnelling to the first home agent HA1 for mobility services via the first mobility service provider MSP1. Mobile node MN then detects the presence of a second mobility service provider MSP2 whose services it wishes to benefit from.

In step S12 of the method of the first embodiment, mobile node MN attempts to register with the second Home Agent HA2 of the second mobility service provider MSP2 by transmitting a Registration Request to the second home agent HA2.The transmitted Registration Request includes an alternate Home Address Field in which the first home address HoA1 allocated by the first home agent HA1 is inserted.

In step S13, when the second home agent HA2 receives the Registration Request from the mobile node MN, it processes the Alternate Home address field. If authentication of the Registration Request message succeeds, the second home agent HA2 allocates the mobile node MN a second Home address HoA2, from its pool of available addresses, which is different to the first address HoA1. As a consequence, there is no risk of the second home agent allocating a home address that the mobile MN is already using.

In step S14, the second home agent HA2 sends a Registration Reply to the mobile node MN containing new home address HoA2.

In step S15 the mobile node MN has been allocated two different home addresses HoA1 and HoA2. The mobile node MN can therefore simultaneously use both the first home agent HA1 and the second agent HA2 with these two addresses respectively.

In this way there is no conflict in the tunnelling and routing of packets from mobile node MN. Depending on the home address associated with the data packet, the data packet can be transmitted to the first home agent HA1 or to the second home agent HA2 according to the source address of the data packet.

The efficiency of the proposed solution according to the first embodiment of the invention stems from the fact that the mobile node MN informs the second home agent HA2 of the first home address HoA1 that it is already using in the Registration Request. Consequently, the second home agent HA2 is informed of an already existing Home address for a given mobile node MN and will be able to allocate another HoA which will be necessarily different from the one already in use. In this solution, there is no need for any additional signalling in addition to the default registration with the new Home Agent.

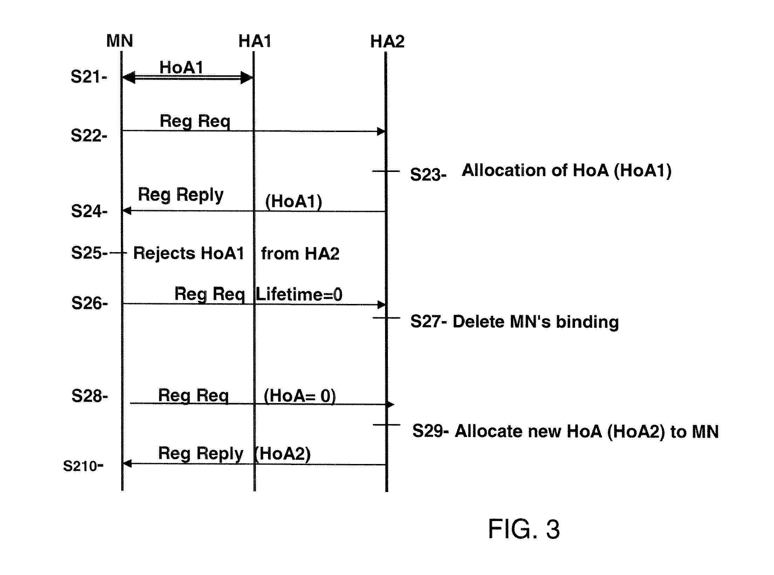

A method of allocating a plurality of mobile addresses to a mobile node MN, according to a second embodiment of the invention will be described with reference to Figures 1 and 3.

In step S21 of the method of the second embodiment of the invention mobile node MN is registered with the first home agent HA1 of the first mobility service provider on network N1 and is allocated a first Home Address HoA1 enabling it to communicate with the outside world. The mobile node MN thus uses tunnelling to the first home agent HA1 for mobility services via the first mobility service provider MSP1. Mobile node MN then detects the presence of second mobility service provider MSP2 whose services it wishes to benefit from.

In step S22, the mobile node MN sends a Registration Request message to register with the second home agent HA2 of the second mobility service provider MSP2.

In step S23, the second home agent HA2 grants the mobile MN a new Home address HoA. This Home address happens to be the same as HoA1 which is already in use by the mobile node MN with the first home agent HA1.

In step S24, the second home agent replies to the mobile node MN with a Registration Reply containing the new address HoA1.

In step S25, the mobile node MN rejects the new Home Address HoA1 proposed by the second home agent HA2 since the Home Address HoA1 is already in use by the mobile node MN.

Consequently, in step S26 the mobile node MN sends a de-registration to the second home agent HA2 to express its rejection of the proposed home address HoA1. To do so, the mobile node MN sends another Registration request to the second home agent (HA2) with the Lifetime flag set to 0. On receiving a registration request with Lifetime =0 in step S27 the second home agent HA2 deletes the mobility binding, i.e. the association between the home address allocated by the second home agent to the mobile node and the Care-of-address for the mobile node MN.

The mobile node MN then sends again another Registration request with a Home address field set to 0, to request a new Home Address from the second home agent HA2 during step S28.

When the second home agent HA2 receives two consecutive Registration Requests in such a sequence, from the same mobile node MN, it then allocates a new home address HoA2, different from the previous home address HoA1 allocated to the mobile node MN.

In step S210 the second home agent HA2 sends a Registration Reply to the mobile node MN with the new Home address: HoA2, where HoA2 ≠ HoA1.

The second embodiment provides an alternative solution to the problem of resolving conflict in the routing of packet streams by a mobile node simultaneously connected to two networks.

Since the mobile node is allocated two different home addresses conflict in routing packet streams from the mobile node is avoided since each packet stream can be correctly routed according to its source address HoA1 or HoA2.

The clear advantage of the method according to the second embodiment of the invention is that it does not incur any modification to the base Mobile IP protocol.

The only requirement for the second home agent is to allocate a different IP address to the mobile node MN when it receives the two consecutive Registration Request messages in the order described above. This requirement is not a high constraint on the home agent side since it can be easily implemented by a dynamic address allocation software which allows the home agent to keep memory of the last home address assigned to a mobile Node. The only constraint imposed on the system is the requirement for the home agent HA to keep track of the last address allocated to each MN. This implies a certain level of memory in the Home address allocation software.

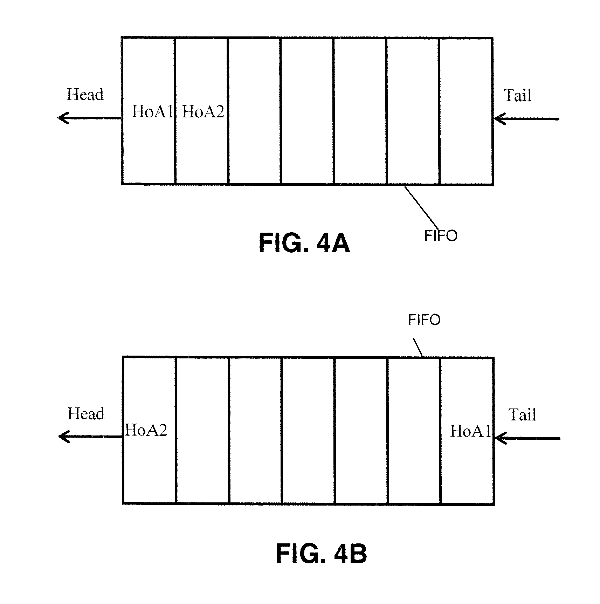

Alternatively, with reference to Figures 4A and 4B such a method can be achieved if the Home Agent System implements its DHCP (Dynamic Host Configuration Protocol) with a relatively large First-In-First-Out (FIFO) memory. In the FIFO memory , the first element to be piled off the stack at the HEAD is returned to the FIFO at the TAIL. If the Home Agent system is implemented with such a FIFO, the home addresses HoAs to be allocated to the mobile nodes MN constitute the elements of the FIFO. When a Home address HoA is allocated to a mobile node MN, it is piled out of the FIFO head. Then when the mobile node MN de-registers that home address HoA, that home address HoA is returned to the FIFO at the tail of the FIFO. If the FIFO is long enough, then the next home address HoA selected from the head is very likely to be different from the one piled up at the tail. In fact it is always different when the length of the queue is greater than 1. In a pool of addresses, each address is unique within that pool. Hence when the length of the FIFO is greater than 1, we never have two identical addresses within that queue. Figures 4A and 4B depict how a Home address HoA1 is piled out of a FIFO memory when allocated to a mobile node MN. In Figure 4A, home address HoA1 which is at the Head of the FIFO, will be removed from the FIFO when allocated to the mobile node MN. When the MN returns its Home address to the Home agent, (which happens when the MN de-registers its Home address), the Home address HoA1 is placed at the tail of the FIFO as shown in Figure 4B.

Using a sufficiently long FIFO for the implementation of the Home address allocation in a home agent system significantly reduces the risk of allocating the same Home address twice to the same mobile node MN when that mobile node MN requests a Home address twice within a very short time interval. Hence the FIFO implementation reduces or eliminates the risk of re-allocating a same IP address to the MN within the small time interval.

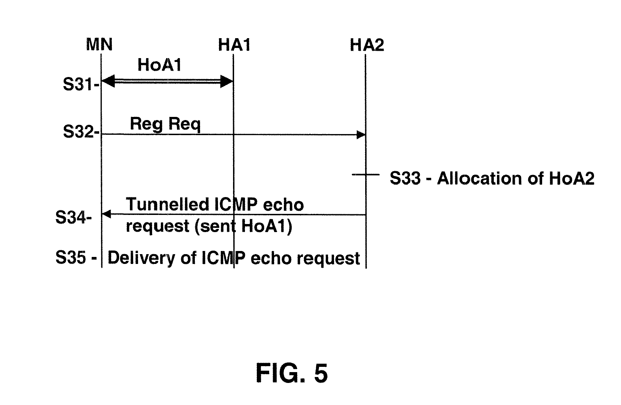

A third embodiment of the invention will now be described with reference to Figures 5 to 7. The solution according to the third embodiment of the invention introduces a probe message sent by the new Home Agent to check if the address it has selected for the mobile node MN is not already in use by the MN.

As in the previous embodiments, in step S31 the mobile node MN is registered with the first home agent HA1 and has been allocated a first home address HoA1.

In step S32 the mobile node MN sends a registration request message to the second home agent HA2 in order to benefit from a second mobility service provider MSP2. The mobile node MN thereby registers with the new home agent HA2 of the second mobility service provider MSP2.

In Step S33 the second home agent HA2 selects a new home IP address HoA2 from a pool of available home addresses for the mobile node MN and creates a Binding Cache entry for the selected home address HoA2 to the Care of Address CoA2 where CoA2 is the address from where the mobile node MN is attempting to register. It will be appreciated that the Care of Address CoA2 could be a new address or could be the old Care of address of the MN. The second home agent HA2 thereby creates a binding cache entry for the mobile node's MN new selected Home address HoA2.

In step S34 the second home agent HA2 sends a probe message destined to the Home address HoA2 that the second home agent HA2 has selected and intends to allocate to the mobile node MN. The probe message could be transported by any protocol. For example, in this embodiment, the probe message is sent as an "ICMP echo" of a ping application. Since the Binding cache entry corresponding to the association between the mobile nodes intended second home address HoA2 and the mobile nodes CoA2, has been created, the probe message (ICMP echo request) is tunnelled to the Care of Address CoA2 of the mobile node.

In step S35 when the tunnelled ICMP echo request is received at the mobile node's care of address CoA2, it is de-tunnelled and delivered to the mobile node MN. Two situations can then arise:

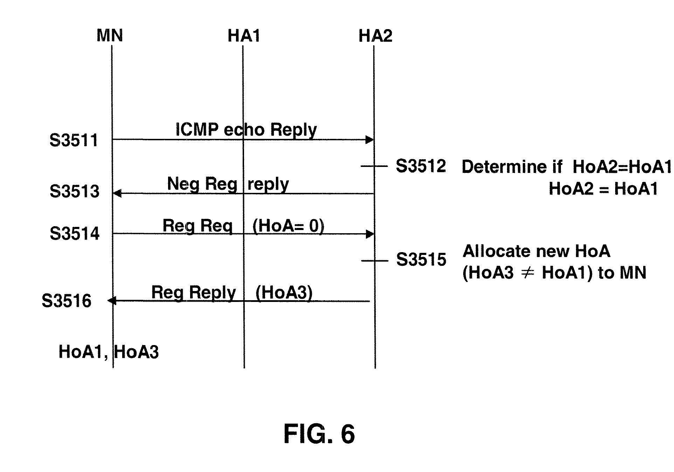

With reference to Figure 6, if the destination address of the ICMP echo request i.e. the address HoA2 selected by the second home agent HA2 is in use by the mobile node MN, following steps occur.

In step S3511 an ICMP echo Reply will be returned from the mobile node MN to the second home agent HA2.

On receiving the echo reply from the mobile node MN the second home agent HA2 realises in step S3512 that the home address HoA2 that it intended to allocate to the mobile node MN is already in use by the mobile node - i.e. HoA2=HOA1.

Consequently, in step S3513 the second home agent HA2 deletes the Binding cache entry it had created for the mobile node MN and sends a Registration Reply (Negative Reply in response to the Registration Request) with Code 128. Code 128 stands for reason unspecified to deny the Registration. Alternatively if code 128 is not used, a new code may be proposed. In this reply, the Home address field is set to HoA1.

In step S3514 the mobile node MN sends a new Registration Request to the second home agent HoA2 with the Home Address field HoA set to 0 requesting a Home address from the second home HA2.

In step S3515 the second home agent HA2 must therefore allocate a new Home address (HoA3) which is different from the previous one allocated (HoA2=HoA1; HoA3≠HoA2).

In step S3516 a registration reply allocating home address HoA3 to the mobile node (MN) is sent to the mobile node (MN) from the second home agent (HA2).

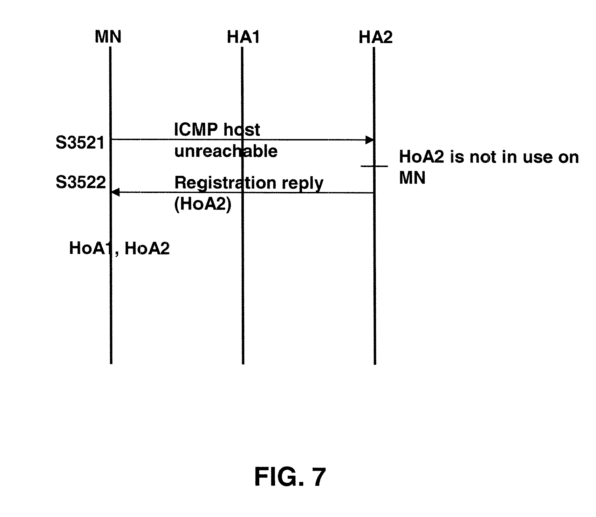

With reference to Figure 7, if the destination address i.e. the second home address HoA2 of the ICMP echo request is not in use on the mobile node MN, the mobile node realises that the echo request sent during step S34 of Figure 5 is not destined for it. As a consequence the following steps occur:

In step S3521 an ICMP host unreachable message is sent back to the second home agent HA2 informing it that the Home address HoA2 that it intends to allocate to the mobile node MN is not being used by the mobile node MN.

In step S3522 the second home agent (HA2) sends a registration reply to the mobile node allocating the second home address (HoA2) to the mobile node MN. The mobile node MN therefore gets a new Home Address HoA2 from the HA2 which is different to the first home address HoA1 received from the first home agent.

This embodiment thus provides an alternative solution to the problem of resolving conflict in packet routing which is encountered when a mobile node is allocated the same home address by two independent home agents. The main advantage of the solution of the third embodiment lies in the testing of the candidate Home address prior to its allocation to the mobile node MN. Hence the new home agent will not allocate an address that is already in use on the mobile node. The method according to this embodiment of the invention prevents the long delay that might occur when an event of duplicate home address arise on the mobile node.

A possible improvement of each of the embodiments of the invention hereinbefore described would be for the home agent to store an association between the user or mobile node identifier and the home address that it has allocated to that mobile node. The interest of this additional step is that the number of messages exchanged between the mobile node and the home agents may be decreased while ensuring that the mobile node does not get allocated the same home address by different home agents. This additional embodiment of the proposed solutions is especially effective in the situation when the mobile is moving back and forth between two or more different networks.

With reference to Figure 1, supposing that the mobile node MN moves back and forth between the first network N1 and the second network N2. The mobile node is in the first network N1, it also attaches to the second network N2 while getting services from both networks at the same time. The mobile node MN then decides that it no longer wishes to use services from the first network N1, while using only services from the second network N2. Consequently, the mobile node MN de-registers from the first network. After a certain time though, the mobile node wishes to use services from the first network N1 again, while also keeping its ongoing communication with the second network N2.

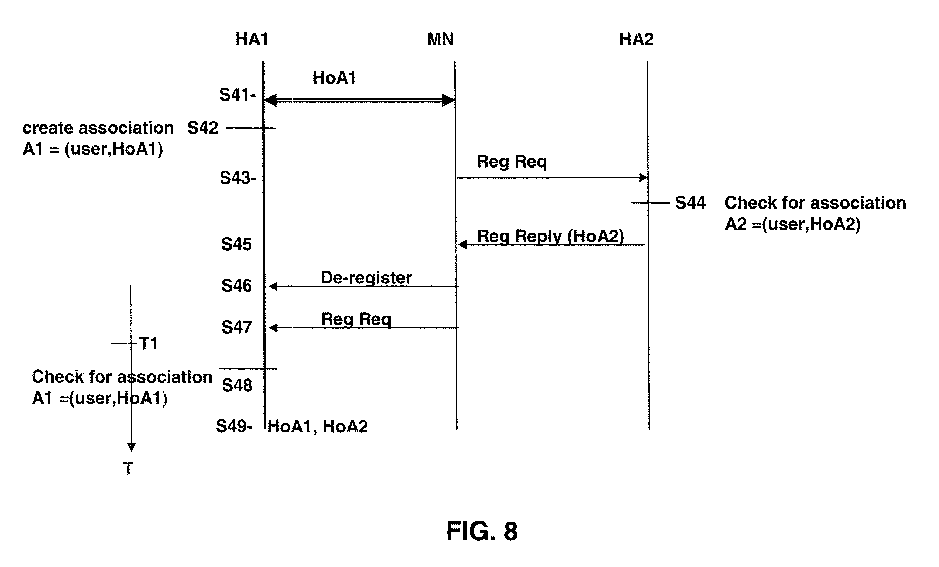

Accordingly, the steps of a method according to a fourth embodiment of the invention are outlined below, with reference to Figure 8.

In step S41 the mobile node MN registers with the first home agent HA1 of the first network N1, and the first home agent HA1 of the first network N1 allocates the home address HoA1to the mobile node MN.

In step S42 the home agent HA1 creates an association A1 between the user identifier (e.g. the mobile node's SIM number) and the first home address HoA1 that it has just allocated to the mobile node MN, e.g. association A1 = (user, HoA1). The association A1 is maintained by the first home agent HA1 for a time T.

The mobile node MN then registers with the second home agent HA2 in step S43 because it wishes to use services from the second network N2 by sending a normal Register Request message to the second home agent HA2 of the second network N2.

In step S44 when the mobile node MN registers with the second home agent HA2, the second home agent HA2 checks whether there is an association A2 which has been created before by the second home agent HA2 between the mobile node MN and a home address.

If there exists such an association A2 = (user, home_address2), then in step S45 the MN is allocated by the second home agent the home address HoA2 which corresponds to the home_address2 the mobile node was previously allocated in Network2.

If such an association A2 does not exist, then the second home agent HA2 in step S45 allocates to the mobile node a home address HoA2 using any of the solutions of the previous embodiments described above. In this case, an association A2 = (user, HoA2) is now created at the second home agent HA2.

In step S46, the mobile node MN no longer wishes to use services from the first network N1, so it de-registers from the first home agent HA1. The first home agent HA1 then activates a time T during which the association A that has been created above (at step S42) will be maintained, even if the user has de-registered.

In step S47 after a time T1 with T1 < T, the mobile node MN wishes to use again some services from the first Network N1, while continuing with the ongoing connections within the second Network N2. The mobile node MN remains registered with the second home agent HA2, and it also registers with HA1, by sending a normal Register Request to the HA1

In step S48 on reception of this Register Request message, the first home agent HA1 checks whether there is any association of type A1 which has been created before for that mobile node MN

If there exists an association A1 = (user, home_address1), then the first home agent HA1 assigns to the mobile node MN the first home address HoA1 corresponding to home_address1 (taken from the association A1). In this way, it is ensured that HoA1 will be different from HoA2.

If no association A1 exists, then the first home agent HA1 gives to the mobile node MN a home address HoA1 using any of the solutions of the previous embodiments of the invention to ensure that home address HoA1 is different to home address HoA2. Then, an association A1 = (user, HoA1) is created at HA1.

When the time T has elapsed at the first home agent HA1, then the first home agent HA1 deactivates association A1 which it has previously created.

The methods according to the embodiments of the invention prevent the conflicts that would occur if two or more Home Agents allocate two or more identical addresses to a Mobile Node wishing to connect simultaneously to two corresponding mobility service provider networks. Having identical Home addresses for different Mobility Service Providers makes it more difficult for the mobile MN to separate different traffic streams to be sent into different Mobility Service Providers networks. The methods according to the embodiments of the invention allow a Mobile Node to use several Mobility service providers simultaneously and prevent any ambiguity on packets routing that may occur when two or more home addresses are identical.

The method according to the embodiments of the invention can find applications in mobile MIP applications such as IPv4 applications. Further applications in the framework of multiple home address allocations may be found in proxy mobile PMIPv4 applications in which an external network node (a mobility proxy agent) acts as proxy mobile node that registers the location of an IPv4 device which is not enabled with Mobile IP functionalities. The proxy mobile node or mobility proxy agent registers the location of the device and maintains reachability while the device is on the network. The mobility proxy agent may be an access point a base station, an access router or an access gateway.

The method according to embodiments of the invention may also be applied in Mobile IPv6 applications. In MIPv6, although the probability of identical home address allocation may be minimised, if such a situation occurs, a method inspired by the methods of the invention could also be applied. In MIPv6 if a mobile node MN is using two different HAs located on the same network, the IP addresses that the two home agents will be allocating will have the same prefixes. Having the same prefix, on two different pools of IP addresses can increase the chance of address collision across home networks.

Although the present invention has been described hereinabove with reference to specific embodiments, the present invention is not limited to the specific embodiments, and modifications will be apparent to a skilled person in the art which lie within the scope of the present invention.

For instance, while the foregoing examples have been explained with respect to a mobile node in communication with two networks, it will be understood that the methods can be applied to a mobile node requiring access to any number of mobility service provider networks, and thus requiring allocation of a plurality of home addresses.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of allocating a plurality of home addresses to a mobile node, the method comprising:
receiving a registration request from the mobile node at a second network entity, the mobile node having a first home address allocated by a first network entity;
receiving an indication for address allocation from the mobile node at the second network entity;
processing the indication to enable the second network entity to allocate to the mobile node a further home address different to the first home address; and
allocating the further home address to the mobile node.

2. A method according to claim 1, wherein the indication is provided by the registration request including the first home address; and
wherein the registration request is processed such that the second network entity allocates to the mobile node, a second home address as the further home address such that the second home address is different to the first home address included in the registration request.

3. A method according to claim 1, wherein the second network entity allocates a second home address to the mobile node and transmits a registration reply containing the second home address to the mobile mode; and wherein the indication is provided by receiving, if the second home address is identical to the first home address, a second registration request indicating rejection of the second home address and a third registration request from the mobile node requesting a new home address; and wherein on reception of the second and third registration requests from the mobile node, the network entity allocates to the mobile node, a third home address, different to the second home address, as the further home address.

4. A method according to claim 1, wherein the second network entity selects a second home address for the mobile node and transmits a probe message to a destination corresponding to the second home address, wherein the indication is provided by the response to the probe message, the method further comprising either allocating to the mobile node, a third home address, different to the second home address, as the further address if the response indicates that the second home address is already in use by the mobile node; or allocating to the mobile node, the second home address, as the further address, if the response indicates that the second home address is not already in use by the mobile node.

5. A method of registering a mobile node at a first network entity and at a second network entity, the method comprising
transmitting a registration request from the mobile node to a second network entity, the mobile node having a first home address allocated by a first network entity; and
transmitting an indication for address allocation to the second network entity to enable the second network entity to allocate to the mobile node a further home address different to the first home address.

6. A method according to claim 5, further comprising
inserting the first home address into the registration request to provide the indication; and
transmitting the registration request including the first home address to the second network entity.

7. A method according to claim 5, further comprising;
receiving a registration reply containing a second home address; and if the second home address is identical to the first home address the indication is provided by transmitting a second registration request to the second network entity indicating rejection of the second home address and transmitting a third registration request to the second network entity requesting a new home address as the further address.

8. A method according to claim 5, further comprising receiving a probe message transmitted from the second network entity to a second home address and wherein the indication is provided by transmitting a reply to the probe message, to the second network entity indicating if the second home address is identical to the first home address.

9. A network entity comprising:
a transceiver for receiving a registration request from a mobile node, the mobile node having a first home address allocated by a first network entity;
the transceiver further being for receiving an indication for address allocation from the mobile node; and
a processor for processing the indication to enable the network entity to allocate to the mobile node a further home address different to the first home address, and for allocating the further address to the mobile node.

10. A network entity according to claim 9, wherein the indication is provided by the registration request including the first home address allocated to the mobile node by the first network entity; and wherein the processor is operable to process the registration request to allocate the further home address, such that the further home address is different to the first home address included in the registration request.

11. A network entity according to claim 9, wherein
the processor is operable to allocate a second home address to the mobile node; and the transceiver is operable to transmit a registration reply containing the second home address to the mobile mode and to receive from the mobile node, as the indication, if the second home address is identical to the first home address, a second registration request indicating rejection of the second home address and a third registration request for requesting a new home address; and wherein the processor is operable, on reception of the second and third registration requests from the mobile node, to allocate to the mobile node a third home address different to the second home address, as the further address.

12. A network entity according to claim 9, wherein the processor is operable to
select a second home address from a plurality of available IP addresses for the mobile node,
generate a probe message for transmission to the second home address; wherein the indication is provided by the reply to the probe message,
process the reply to the probe message to determine if the second home address is in use by the mobile node and to
either allocate to the mobile node a third home address, different to the second home address, as the further address, if it is determined that the second home address is already in use by the mobile node; or allocate the second home address as the further address to the mobile node if it is determined that the second home address is not already in use by the mobile node.

13. A mobile node capable of being registered to a first network entity and to a second network entity, the mobile node having a first home address allocated by the first network entity and comprising
a transceiver for transmitting a registration request to the second network entity and
a processor for providing an indication for enabling the second network entity to allocate to the mobile node a second home address different to the first home address, the transceiver being operable to transmit the indication to the second network entity.

14. A mobile node according to claim 13 wherein:
the processor is operable to insert the first home address into the registration request to provide the indication; and
the transceiver is operable to transmit the registration request including the first home address to the second network entity.

15. A mobile node according to claim 13, wherein the transceiver is operable to receive a registration reply containing a second home address and
the processor is operable to process the registration reply to provide the indication, such that the indication comprises transmission of a second registration request to the second network entity indicating rejection of the second home address and transmission of a third registration request to the second network entity requesting a new home address.
